(19) Europäisches Patentamt
European Patent Office
Office européen des brevets

(11) Publication number: **0 199 507**
**B1**

(12) # EUROPEAN PATENT SPECIFICATION

(45) Date of publication of patent specification: **25.10.89**

(51) Int. Cl.$^4$: **C 01 B 17/04,** B 01 D 53/34

(21) Application number: **86302698.5**

(22) Date of filing: **11.04.86**

(54) **Treatment of gases.**

(30) Priority: **12.04.85 GB 8509393**

(43) Date of publication of application:
**29.10.86 Bulletin 86/44**

(45) Publication of the grant of the patent:
**25.10.89 Bulletin 89/43**

(84) Designated Contracting States:
**AT BE DE FR IT NL SE**

(56) References cited:
**EP-A-0 165 609**
**FR-A-2 377 967**
**US-A-3 617 221**

**THE OIL AND GAS JOURNAL, 2nd May 1966, pages 86-89; P.C. OPEKAR et al.: "How a computer can optimize sulfur-plant design operations"**

(73) Proprietor: **The BOC Group plc**
**Chertsey Road**
**Windlesham Surrey GU20 6HJ (GB)**

(72) Inventor: **Watson, Richard William**
**1 Woodlands Grove**
**Ilkley West Yorkshire (GB)**

(74) Representative: **Wickham, Michael et al**
**c/o Patent and Trademark Department The BOC Group plc Chertsey Road**
**Windlesham Surrey GU20 6HJ (GB)**

**EP 0 199 507 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the treatment of gases. In particular, it relates to the treatment of a gas stream comprising hydrogen sulphide.

Gas streams comprising hydrogen sulphide are typically produced as waste products or by-products from many indistrial processes. For example, acid gas streams comprising carbon dioxide and hydrogen sulphide are typically produced during oil refinery operations to remove sulphur from crude oil. It is necessary to treat such hydrogen sulphide containing streams before discharging them to the atmosphere so as to reduce or remove altogether their content of sulphur-containing gases. One well known widely practised process for treating a gas stream comprising hydrogen sulphide is the Claus process. This process is based on the reaction between hydrogen sulphide and sulphur dioxide to form sulphur vapour and water vapour in accordance with the equation:

$$SO_2+2H_2S=2H_2O+3S$$

Sulphur exists in the vapour phase in a number of different molecular species such as $S_2$, $S_6$ and $S_8$ according to the temperature.

The first stage of the Claus process is to burn approximately a third of the hydrogen sulphide in the incoming gas stream to form sulphur dioxide and water vapour in accordance with the equation:

$$2H_2S+3O_2=2H_2O+2SO_2$$

This combustion reaction takes place in a suitable furnace and normally air is used as the source of oxygen for the purposes of combustion. The furnace is designed such that reaction between the sulphur dioxide and hydrogen sulphide can start in the combustion zone and then continue downstream of the combustion zone. It is however a feature of the Claus reaction that at the temperature that is created by the combustion of hydrogen sulphide, it is not possible to convert more than about 75% of the remaining hydrogen sulphide to sulphur by reaction with sulphur dioxide, and typically between 50 to 70% of the hydrogen sulphide is so converted. It is however possible to achieve higher percentage conversion in the presence of a catalyst at a reaction temperature in the order of 200 to 350°C by reacting the remaining hydrogen sulphide and sulphur dioxide. (At such "catalytic" temperatures, the lower the temperature the higher is the percentage conversion that is achieved). Accordingly, after the gases pass out of the so-called thermal region of the furnace they are cooled to a temperature at which the sulphur that is formed in the furnace condenses and is recovered. The gases are then reheated to a temperature suitable for the performance of a catalysed reaction between hydrogen sulphide and sulphur dioxide, such temperature typically being in the order of 200°C. A catalytic reaction is then carried out and typically about 60% of the remaining hydrogen sulphide is converted to sulphur. Nonetheless, it is still not possible to achieve 100% conversion as in practice conversions of more than 99.5% can be achieved only at a temperature at which the sulphur vapour condenses and thereby substantially reduces the effectiveness of the catalyst. It is therefore typical to perform the catalytic oxidation of hydrogen sulphide with sulphur dioxide in more than one stage with first condensation of sulphur vapour and then re-heating of the hydrogen sulphide bearing gas stream being carried out between each stage. Various means may be employed to effect reheating of the gases prior to each catalytic stage. For example, a small part of the feed gas mixture can be diverted from upstream of the furnace and burnt in in-line burners completely to sulphur dioxide, there being typically one such burner upstream of each catalytic reactor. The hot sulphur dioxide containing gases are then mixed with the main gas stream upstream of each respective catalytic reactor so as to effect reheating. Alternatively, a part of the main gas stream can be taken from, say, a waste heat boiler used to cool the main gas stream leaving the furnace and used in the same manner as the gas from the in-line burners. Another alternative is to employ indirect heat exchange with for example steam to effect reheating. Typically, after two or three such stages, sulphur is condensed out of the gas stream which is then passed to a tail gas clean-up process of a known kind suitable for handling relatively dilute hydrogen sulphide streams (for example the Scot, Beavon or Stretform process) or which is then incinerated.

Many variations on this basic Claus process are possible. Some of these alternatives are summarised in the paper "Sulfur Costs vary with Process Selection" by H. Fischer, Hydrocarbon Processing, March 1979. pp. 125 to 129.

Recently, there has been a trend towards using crude oils of relatively high sulphur contents and also a trend towards stricter environmental standards so far as the discharge to the atmosphere of sulphur-containing gases is concerned, thus requiring an increased number of hydrogen sulphide bearing streams to be treated and hence more treatment capacity for hydrogen sulphide containing gases. For example, where possible, it is desirable to increase the rate at which an existing Claus plant is able to produce sulphur. In practice, the ability of such plants to handle an increased throughput of hydrogen sulphide containing gas is limited. It has been realised that in order to supply the necessary oxygen for combustion, approximately 15 volumes of air are required for each six volumes of hydrogen sulphide in the gas mixture. It has been proposed in for example a paper entitled "Oxygen Use in Claus Sulphur Plants" by M. R. Gray and W. Y. Svreck, 1981 Gas Conditioning Conference, Oklahoma, 1981 and in a paper entitled "Modifications Jump Sulphur Recovery Plant Capacity",

Oil and Gas Journal, August 20th 1984, pp. 108 to 112, that the capacity of existing Claus processes can be increased by substituting some commercially pure oxygen for air and thereby reducing the proportion of nitrogen in the gas mixture that flows through the process. In practice, however, in many plants, the amount of uprating that can be achieved by this method is limited as there is a tendency for the reduced volume of nitrogen to lead to higher exit temperatures from the furnace that cannot be withstood by in the waste heat boiler or heat exchanger associated with the furnace or by the refractory lining of the furnace. Indeed, the more concentrated (in hydrogen sulphide) the feed gas stream, the less is the possibility for achieving any significant uprating, such possibility often becoming particularly limited for feed gas streams including 80% by volume or more of hydrogen sulphide. Another proposal for using pure oxygen in the Claus process is set out in US patent specification 3 681 024 and its corresponding Canadian patent specification 854094. These patent specifications disclose burning one third of a hydrogen sulphide stream with oxygen of about 95% purity. Plant effluents from a one or two catalytic reactor unit is sent to a water scrubber to reduce the water content of the effluent, and a sufficient amount of the scrubber off-gas is recycled to dilute the oxygen feed so that the furnace temperature is essentially equivalent to that obtained with operation with air. This process is stated to have the advantage of enabling plant size to be reduced. However, existing plants constructed with the intention of using air to support the combustion of the hydrogen sulphide are not readily convertable to perform the process described in US patent specification 3 681 024 this process has not found commercial favour.

It is an aim of the present invention to provide an improved method for recovering sulphur from a gas stream containing at least 50% by volume of hydrogen sulphide which are capable of minimising the volumes of ballast gas such as nitrogen that flow through the sulphur recovery process, and which do not of necessity rely on recycling effluent gas to the inlet of the furnace.

According to the present invention there is provided a method of recovering sulphur from a feed gas stream containing at least 50% of volume of hydrogen sulphide, including burning a first portion of hydrogen sulphide in the stream by reacting the stream with an oxygen-containing gas stream having a molecular oxygen concentration of at least 22% by volume in a combustion region to form combustion products comprising sulphur dioxide and water vapour, reacting sulphur dioxide thus formed with a second portion of hydrogen sulphide in the feed gas stream, and controlling the temperature of the reacting gases by introducing into them one or both of a non-combustible vaporisable, liquid quenchant, and a vaporous quenchant stream comprising at least 80% by volume of steam.

The sulphur may be recovered by condensation of sulphur vapour and removal of the condensate from the feed gas stream once the reaction between hydrogen sulphide and the sulphur dioxide has proceeded to a desired extent. Prior to condensation, pre-cooling of the reacting gases will typically be performed in a waste heat boiler or heat exchanger.

The quenchant (or moderator) is preferably liquid water. In comparison with nitrogen, liquid water has a relatively high specific heat. In consequence, in comparison with the conventional process of burning a portion of hydrogen sulphide in the feed gas stream using air, a greater amount per unit time of feed gas stream can be handled in accordance with the invention without necessarily increasing either the flow of effluent gas out of the furnace, or the temperature of the effluent gas leaving the furnace, and without significant loss of conversion efficiency. It is generally important to control the effluent gas temperature closely as on the one hand the yield of sulphur condensed from the effluent gas will increase with increasing temperature while on the other hand above a given temperature (often from 1200 to 1250°C) the waste heat boiler (or heat exchanger) associated with the furnace will be damaged. It is therefore desirable to keep the temperature of the effluent gases at the highest temperature that the waste heat boiler can withstand. In general, the higher the calorific value of the feed gas stream, the greater is the advantage that can be obtained from the invention. The method and apparatus according to the invention are thus particularly suited to use in recovering sulphur from feed gas mixtures containing more than 50% by volume of hydrogen sulphide. Marked advantages may be obtained when the feed gas mixture contains more than 75% by volume of hydrogen sulphide, and in typical examples, a feed gas stream containing from 80 to 100% by volume of hydrogen sulphide is treated. The amount per unit time of feed gas stream that can be handled also becomes greater the greater is the concentration of oxygen in the oxygen-containing gas stream, and preferably the stream comprises at least 60% and most preferably at least 90% by volume of oxygen. Normally, commercially pure oxygen is the preferred source of the oxygen-containing gas stream. Typically, with a feed gas stream containing about 85% by volume of hydrogen sulphide, the overall flow of gases out of the furnace or at any downstream point in the plant may by using pure oxygen and a liquid water quenchant be reduced by about 80% in comparison with the conventional air based Claus Process. In the event that pure oxygen is not used, the oxygen-containing gas stream preferably comprises oxygen-enriched air.

An alternative liquid quenchant is liquid carbon dioxide. However, this liquid is more difficult to handle than water. Liquid water is thus preferred. It is also preferred on the ground that it condenses at above ambient temperature and can thus if desired be more readily removed from the effluent gas stream than carbon dioxide. Another

alternative to liquid water is a vaporous stream comprising at least 80% and preferably 100% steam. Such a gas stream quenchant is less effective than liquid water as it has no latent heat available for the cooling.

After a desired proportion of the hydrogen sulphide in the feed gas mixture has been converted to sulphur, and the resulting sulphur condensed, the remaining sulphur compounds may be converted back to hydrogen sulphide, and water vapour is then preferably condensed or scrubbed out of the remaining gas mixture so as to concentrate the remaining gases. When liquid water is the quenchant, and the oxygen-containing gas stream consists essentially of oxygen, a tail gas stream can be formed having a relatively high concentration of hydrogen sulphide.

The quenchant is preferably introduced into the flame produced by the combustion of said first portion of hydrogen sulphide, but alternatively or in addition it may be introduced into the reacting gases at a region outside the flame envelope. The quenchant is preferably passed through the burner prior to entering the flame. If desired, a liquid quenchant may be atomised prior to its introduction into the reacting gases.

It is desirable to ensure that only about one third of the hydrogen sulphide in the feed gas stream is burnt to form sulphur dioxide. This ensures that hydrogen sulphide and sulphur dioxide are present in approximately the stoichiometric proportions required by the reaction between hydrogen sulphide and sulphur dioxide in the furnace and in any subsequent reactor. If the feed gas contains other combustible constituents, such as hydrocarbons, additional oxygen is desirably added to enable the complete oxidation of these products to take place.

By using liquid water or steam as the quenchant, and an oxygen-containing gas stream consisting of commercially pure oxygen, it is typically possible to produce after condensation and removal of the sulphur vapour, a gas mixture having a comparatively high concentration of sulphur containing gases in comparison with the gas mixture produced at the comparable stage of a comparable conventional Claus sulphur recovery process, without any loss of conversion in the furnace. This facilitates any subsequent processing of the gas mixture in a catalytic reactor to form further sulphur vapour by the reaction between hydrogen sulphide and sulphur dioxide. If desired, it is possible to work at a higher than conventional outlet temperature (say 350 to 375°C instead of say 300 to 350°C) from such reactor so as to obtain improved hydrolysis of any carbon oxysulphide and or carbon disulphide present in the gas mixture.

The said gas mixture produced after said condensation and removal of the sulphur vapour will also typically have a comparatively high concentration of water vapour in comparison with a conventional Claus sulphur recovery process. For example, if the feed gas mixture contains 85% or more by volume of hydrogen sulphide, the said gas mixture after condensation and removal of sulphur vapour may typically contain at least 15% by volume of sulphur-containing gases and at least 70% by volume of water vapour. We believe such high concentrations of water vapour in the said gas mixture ultimately make possible the achievement of further improvements in subsequent treatment steps.

Preferably, said gas mixture after said condensation and removal of sulphur vapour, is subjected to at least one and typically two successive stages of catalytic conversion of hydrogen sulphide to sulphur vapour by reaction with sulphur dioxide. Sulphur vapour is condensed and removed from the gas mixture after each such stage. After say two such stages the resulting gas stream (after condensation of sulphur vapour) typically contains less than five per cent of the chemically combined sulphur in the feed gas mixture. Rather than incinerating said gas stream, we prefer to treat it by any one of a number of suitable conventional tail gas clean-up processes. If the tail is incinerated, oxygen or oxygen-enriched may be used to reduce the requirement for auxiliary fuel.

Although it is possible to build to custom apparatus for performing the method according to the present invention, the method according to the present invention may be performed on existing Claus sulphur recovery plant with relatively little modification to existing equipment. Typically, it will be desirable to modify the burner of an existing plant by providing for oxygen (instead of air) and quenchant to be supplied to its combustion zone. Where several Claus sulphur plants exist on one site, it may be possible to shut down one or more of the plants and operate the furnaces of the others in accordance with the invention without any loss of sulphur production.

The method and apparatus according to the present invention will now be described by way of example with reference to the accompanying drawings, in which:

Figure 1 is a schematic diagram illustrating a plant for performing the Claus process in accordance with the present invention;

Figure 2 is a schematic side elevation, partly in section of a burner for use in the plant shown in Figure 1.

Figure 3 is a section through the line III—III in Figure 2.

Referring to Figure 1 of the accompanying drawings, a furnace 2 for conducting the Claus reaction is fitted at its upstream end with a burner 4 having an inlet 6 for feed gas containing hydrogen sulphide and an inlet 8 for oxygen containing gas. The method according to the present invention is particularly suited for treating relatively concentrated hydrogen sulphide containing gas streams (e.g. those whose hydrogen sulphide content is greater than 70% by volume). Normally the stream will not consist solely of hydrogen sulphide bit will contain their gases in admixture with it. Usually, the other gas or gases consist primarily of carbon dioxide. In addition,

the feed gas mixture may contain one or more of nitrogen, hydrocarbons, hydrogen, argon and water vapour. The ensuing description relates to a feed gas stream comprising 85% by volume of hydrogen sulphide, and up to 1% by volume hydrocarbon(s) and a balance of carbon dioxide. The oxygen containing gas stream is preferably substantially pure oxygen supplied from a source (not shown) of liquid oxygen or from a "tonnage" air separation plant.

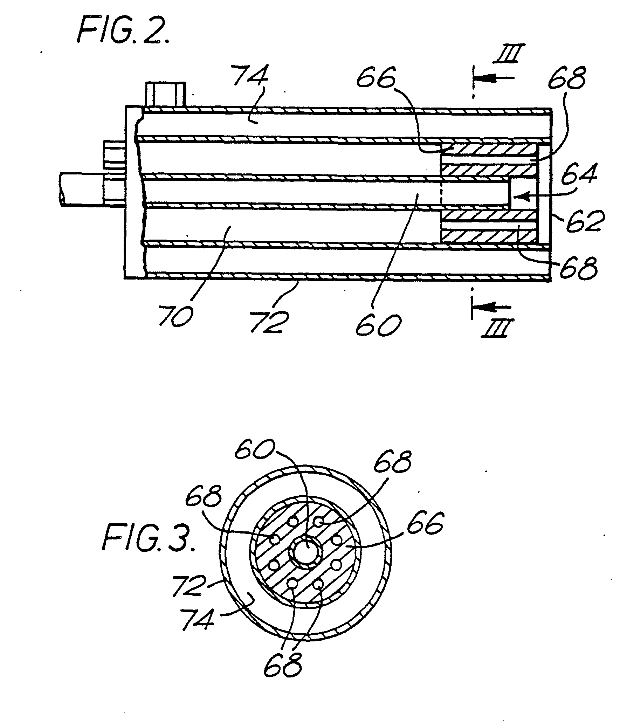

The relative rates of supply of the hydrogen sulphide-containing gas stream and the oxygen containing stream are such that sufficient oxygen is provided for the combustion of one third of the hydrogen sulphide in the hydrogen sulphide containing stream to take place. In addition, sufficient oxygen is provided to burn any combustible constituents in the hydrogen sulphide containing gas mixture. Accordingly, the hydrogen sulphide and any other combustible substance in the feed gas mixture burn in the combustion zone or region 14 of the burner 4. The burner 4 may for example be of a kind that gives a relatively short flame. In either instance, the temperature in the combustion zone 14 is moderated by spraying liquid water directly into the combustion zone. For this purpose, the burner 4 is provided with an auxiliary passage 10 for water typically terminating in an atomising nozzle (not shown) which directs a spray of liquid water into the combustion zone 14. (The configuraton of the burner passage is described in more detail below with reference to Figures 2 and 3). The amount of such liquid quenchant that is injected into the combustion zone is arranged such that the effluent gas leaving the furnace through its exit 17 is within the maximum temperature that the downstream heat removal plant can cope with. Typically this maximum temperature will be in the order of 1100 to 1250°C, although if the plant shown in Figure 1 is built to custom to perform the method according to the present invention rather than comprising a conventional plant that has been adapted to perform the method according to the invention, the downstream heat removal apparatus may be arranged so as to tolerate a higher exit temperature than 1100 to 1250°C. The rate at which water is introduced into the combustion zone of the burner is chosen so as to produce a gas temperature in said exit a few degrees Celsius below said maximum temperature.

In general, the greater the concentration of hydrogen sulphide in the feed gas stream, or the greater its calorific value, the greater is the rate at which water is introduced into the combustion zone of the burner. The liquid quenchant functions as a moderating influence on the temperature reached by the combustion zone 14 of the burner 4 by being raised in temperature from ambient temperature to the temperature of the combustion zone. This will entail both the transfer of latent heat and specific heat to the water. The gas mixture leaving the condenser 20 typically includes more than 70% by volume of water vapour and more than 15% by volume of sulphur containing gases.

Apart from the design of the burner, which needs to be able to cater for the use of pure oxygen instead of air and the use of a liquid quenchant, furnace 2 will in other respects be substantially identical to conventional Claus furnaces. Accordingly, therefore, the furnace will have a suitable refractory lining (not shown) and will have a volume sufficient for there to be a thermal reaction zone 16, surrounding the combustion zone 14, in which the reaction between hydrogen sulphide and sulphur dioxide which is initiated in the combustion zone 14 will continue. If desired, the furnace may be provided with baffles or like means 15 in order to facilitate mixing of the gases in the thermal zone 16. The thermal reaction between hydrogen sulphide and sulphur dioxide is endothermic so some temperature drop takes place in the thermal zone 16. Accordingly, the gas may typically fall in temperature from about say 1350°C in the combustion zone to say from 1200 to 1250°C at the exit 17 of the furnace 2. The effluent gases may be cooled in a waste heat boiler or heat exchanger 18 to a temperature of, say, 275 to 325°C. The waste heat boiler (or heat exchanger 18) typically has two passes for the effluent gases. A major portion of the effluent gases flows through both passes and is thus cooled to said temperature of from 275 to 325°C. A minor portion of said gases flow through only the first pass and leave the waste heat boiler 18 at a higher temperature, typically in the range 590 to 600°C and is used as will be described below. The major portion of the effluent gases then enters a first sulphur condenser 20 in which sulphur vapour formed by the reaction between sulphur dioxide and hydrogen sulphide is condensed out of the gas stream from the furnace 2 by cooling the gas stream to 140°C. Such sulphur condensate is then passed into a sulphur seal pit. Downstream of the first condenser 20, the effluent gas mixture consisting essentially of hydrogen sulphide, sulphur dioxide, water vapour and any nitrogen and carbon dioxide introduced into the furnace 2 with the feed gas mixture, is reheated at 22 to a temperature in the order of 220 to 250°C typically by being mixed with a first stream taken from said minor portion of the effluent gases. Reaction takes place between the residual hydrogen sulphide and sulphur dioxide to form more sulphur vapour and water vapour. This reaction takes place over a catalyst which is typically of a conventional kind, for example, activated alumina. Since the catalytic reaction is exothermic, there is a rise in temperature in the first catalytic reactor 24 and accordingly the gas mixture leaving this reactor 24 will typically have a temperature in the order to 300 to 350°C. If desired, the outlet temperature of the reactor 24 may be higher, say in the range 350 to 400°C (e.g. 375°C). Such a higher outlet temperature will tend to give improved hydrolysis of any carbon oxysulphide and carbon disulphide in the gas mixture. From the catalytic reactor 24 the gas mixture passes through a second sulphur condenser 26 in which sulphur is condensed out of the gas mixture. The resultant sulphur condensate is passed to the sulphur seal

pit. Downstream of the sulphur condenser 26 the gas mixture which typically contains more than 5% by volume of hydrogen sulphide and sulphur dioxide, more than 80% by volume of water vapour, and, typically, a balance of other gases, such as carbon dioxide and nitrogen, is re-heated at 28 from a temperature of, say, 140°C to a temperature of, say, 200 to 220°C, said temperature being typically slightly less than the inlet temperature to the first catalytic reactor 24. The gas stream then passes through a second catalytic reactor 30 where further reaction between residual hydrogen sulphide and residual sulphur dioxide takes place to form water vapour and sulphur vapour with the evolution of heat such that the temperature of the gas mixture is typically raised in the order of 50°C as it passes from the inlet to the outlet of the second catalytic reactor 30. The catalyst employed in the second catalytic reactor 30 is typically the same as that employed in the first catalytic reactor.

Ater leaving the second catalytic reactor 30, the gas mixture passes through a third sulphur condenser 32 in which sulphur is condensed out of the gas stream. The sulphur is passed to the sulphur seal pit 36. The gas stream leaves the third sulphur condenser 32 as a tail gas stream at a temperature in the order of 140°C and then enters a tail gas clean up plant 34.

As the predominant constituent of the tail gas streams is water vapour, it may be readily concentrated in hydrogen sulphide by condensing the water vapour out of the gas mixture. The condensation is preferably performed after the reduction of all sulphur containing compounds to hydrogen sulphide. Accordingly, in comparison with conventional sulphur recovery processes in which air is the sole source of oxygen for the purpose of combustion of hydrogen sulphide, and in which no liquid quenchant is employed, a tail gas stream can be produced which is relatively concentrated (in terms of hydrogen sulphide content), even though typically more than 95% of the incoming hydrogen sulphide may have been converted to sulphur. Thus, the range of economic options available for the treatment of this tail gas stream is considerably wider than in conventional processes and it will in general not be necessary to incinerate the tail gas stream without first subjecting it to a "clean-up" treatment. The tail gas clean-up plant 34 may therefore be selected from for example, the Scott, Stretford and Beavon processes.

A conventional Claus plant may be adapted to perform the method according to the present invention by, as aforesaid, having its burner modified or replaced by one which uses pure oxygen or oxygen-enriched air to support combustion and which uses liquid water or other liquid quenchant to modify or moderate the temperature in the combustion zone of the burner.

A substantial increase in the rate at which the plant is able to treat the feed gas mixture comprising sulphur dioxide is thereby made possible. Indeed, we believe that the limitation on the degree of uprating can be achieved would typically be provided by a limitation on the ability of the sulphur condensers to handle increased capacity rather than on any temperature limitation in the waste heat boiler 18 or equivalent heat exchanger. Normally, even with such a limitation, a substantial increase in production of sulphur can be achieved without any significant reduction in the percentage conversion of hydrogen sulphide achieved prior to passage of the gas stream through the clean-up plant 34. If desired, of course, extra sulphur condensation capacity may be installed in order to remove such limitation.

As is well known, a number of side reactions take place during operation of a Claus process. Where the feed gas mixture contains carbon dioxide and/or hydrocarbons. Carbon disulphide and carbon oxysulphide will be formed as a result of such side reactions. The reverse reaction also takes place at elevated temperature such that the carbon disulphide and carbon oxysulphide are hydrolysed back to hydrogen sulphide. It is to be appreciated that the addition of extraneous water into the system by means of a liquid quenchant will alter the balance of such chemical equilibria in the system. However, we believe that such alterations will have no significant effect of a deleterious nature in the method according to the present invention.

Referring now to Figures 2 and 3 of the accompanying drawing, the burner 4 employed in the furnace 2 has a central axial passage 60 extending therethrough for water. The passage 60 terminates at the tip 62 of the burner 4 in a suitable nozzle 64 whereby in operation water is sprayed, typically in the form of atomised droplets, into the combustion zone. The nozzle 64 is received in a solid heat-conductive member 66, having a plurality of circumferentially-disposed passages 68 formed therethrough. The passages 68 communicate with an annular passage 70 for oxygen. The passages 68 thus communicate with the oxygen supply inlet 8. The burner has a shell 72 which with the member 66 defines an outer annular passage 74 for fuel gas that communicates with the inlet 6. The nozzle 64, and the passages 68 and 74 are dimensioned and disposed such that good mixing among the water, feed gas mixture and oxygen is obtained downstream of the tip 62 of the burner 2. If desired, the shell 72 may be provided with a water jacket to effect its cooling.

Referring again to Figure 1, the furnace 2 may typically be operated at a pressure a little above atmospheric pressure. For example, the pressure in the furnace may be in the range 157 to 203 kPa (1.5 to 2 atmospheres absolute).

**Claims**

1. A method of recovering sulphur from a feed gas stream containing at least 50% by volume of hydrogen sulphide, including burning a first portion of hydrogen sulphide in the stream by reacting the stream with an oxygen-containing gas

stream having a molecular oxygen concentration of at least 22% by volume in a combustion region to form combustion products comprising sulphur dioxide and water vapour, reacting sulphur dioxide thus formed with a second portion of hydrogen sulphide in the feed gas stream, and controlling the temperature of the reacting gases by introducing into them one or both of a non-combustible vaporisable, liquid quenchant, and a vaporous quenchant stream comprising at least 80% by volume of steam.

2. A method as claimed in claim 1, in which the oxygen-containing gas contains at least 90% by volume of molecular oxygen.

3. A method according to Claim 1 or Claim 2, in which the quenchant is introduced directly into the combustion zone created by the combustion of the first portion of the feed gas stream.

4. A method according to any one of the preceding claims, in which the liquid quenchant is introduced into the reacting gas in atomised form.

5. A method according to any one of the preceding claims, in which the feed gas mixture includes at least 70% by volume of hydrogen sulphide.

6. A method according to any one of the preceding claims, in which the liquid quenchant is liquid water.

7. A method according to any one of the preceding claims, additionally including the steps of taking the reacting gases, condensing the sulphur vapour therein, and separating the condensate from said gases.

8. A method according to claim 7, in which the feed gas mixture contains at least 85% by volume of hydrogen sulphide, and the gas mixture after the condensation of sulphur vapour includes at least 70% by volume of water vapour, and at least 15% by volume of sulphur containing gases.

9. A method according to claim 7 or claim 8, in which said reacting gases are cooled in a heat exchanger or waste heat boiler and are then passed into a condenser where said condensation of sulphur vapour is effected.

10. A method according to any one of claims 7 to 9, additionally including the step of subjecting the gas mixture downstream of the sulphur condensation to at least one stage of the catalytic reaction between the residual hydrogen sulphide and residual sulphur dioxide in said gas mixture, whereby further sulphur vapour is formed in the or each such stage.

11. A method according to Claim 10, in which downstream of each such stage of catalytic reaction, said sulphur vapour is condensed and separated from the gas mixture so as to form a tail gas stream free of sulphur vapour.

12. A method according to Claim 11, in which after the condensation is performed downstream of the first stage of catalytic reaction (and upstream of any subsequent stage) the gas mixture comprises more than 80% by volume of water vapour and more than 5% by volume of sulphur containing gases.

13. A method according to any one of Claims 1 to 5, in which the liquid quenchant is liquid carbon dioxide.

**Patentansprüche**

1. Verfahren zur Wiedergewinnung von Schwefel aus einem Speisegasstrom, der mindestens 50 Vol.-% Schwefelwasserstoff enthält, mit Verbrennen eines ersten Anteils von Schwefelwasserstoff in dem Strom durch Reaktion des Stromes mit einem sauerstoffhaltigen Gasstraom mit einer molekularen Sauerstoffkonzentration von mindestens 22 Vol.-% in einem Verbrennungsbereich zur bildung von Verbrennungsprodukten, die Schwefeldioxid und Wasserdampf enthalten, mit Reagieren des so gebildeten Schwefeldioxids mit einem zweiten Anteil von Schwefelwasserstoff im Speisegasstrom und Steuern der Temperatur der reagierenden Gase, indem in eines oder in beide ein nicht-brennbares verdampfbares flüssiges Abschreckmittel und ein dampfförmiger-Abschreckmittelstrom mit mindestens 80 Vol.-% Wasserdampf eingeführt wird.

2. Verfahren nach Anspruch 1, bei dem das sauerstoffhaltige Gas mindestens 90 Vol.-% molekularen Sauerstoff enthält.

3. Verfahren nach Anspruch 1 oder 2, bei dem das Abschreckmittel direkt in die durch Verbrennen des ersten Anteils des Speisegasstromes geschaffene Verbrennungszone eingeführt wird.

4. Verfahren nach einem der vorangehenden Ansprüche, bei dem das flüssige Abschreckmittel in zerstäubter Form in das reagierende Gas eingeführt wird.

5. Verfahren nach einem der vorangehenden Ansprüche, bei dem das Speisegas mindestens 70 Vol.-% Schwefelwasserstoff enthält.

6. Verfahren nach einem der vorangehenden Ansprüche, bei dem das flüssige Abschreckmittel flüssiges Wasser ist.

7. Verfahren nach einem der vorangehenden Ansprüche, zusätzlich mit den Schritten des Aufnehmens der reagierenden Gase, Kondensierens des darin enthaltenen Schwefeldampfes und Abtrennen des Kondensats von den Gasen.

8. Verfahren nach Anspruch 7, bei dem das Speisegasgemisch mindestens 85 Vol.-% Schwefelwasserstoff enthält und das Gasgemisch nach dem Kondensieren von Schwefeldampf mindestens 70 Vol.-% Wasserdampf und mindestens 15 Vol.-% schwefelhaltige Gase enthält.

9. Verfahren nach Anspruch 7 oder 8, bei dem die reagierenden Gase in einem Wärmetauscher oder Abwärmeboiler gekühlt und dann in einen Kondensor eingeleitet werden, wo die Kondensation von Schwefeldampf bewirkt wird.

10. Verfahren nach einem der Ansprüche 7 bis 9, zusätzlich mit den Schritt, daß das Gasgemisch abstromseitig zur Schwefelkondensation zumindestens einer Stufe katalytischer Reaktion zwischen dem Rest-Schwefelwasserstoff und dem Rest-Schwefeldioxid in dem Gasgemisch unterworden wird, wodurch weiterer Schwefeldampf in der oder in jeder solchen Stufe gebildet wird.

11. Verfahren nach Anspruch 10, bei dem abstromseitig jeder solcher katalytischen Reaktionsstufe der Schwefeldampf kondensiert und von dem Gasgemisch getrennt wird, um so einen schwefeldampffreien Endgasstrom zu bilden.

12. Verfahren nach Anspruch 11, bei dem nachdem die Kondensation abstromseitig der ersten Stufe katalytischer Reaktion (und zustromseitig irgendeiner nachfolgenden Stufe) ausgeführt ist, das Gasgemisch mehr als 80 Vol.-% Wasserdampf und mehr als 5 Vol.-% schwefelhaltige Gase enthält.

13. Verfahren nach einem der Ansprüche 1 bis 5, bei dem das flüssige Abschreckmittel flüssiges Kohlenstoffdioxid ist.

**Revendications**

1. Procédé de récupération du soufre à partir d'un courant gazeux d'alimentation contenant au moins 50% en volume de sulfure d'hydrogène, ce procédé comprenant la combustion d'un première partie de sulfure d'hydrogène du courant par réaction du courant avec un courant gazeux contenant de l'oxygène et ayant une concentration en oxygène moléculaire au moins égale à 22% en volume, dans une région de combustion, pour former des produits de combustion comprenant du bioxyde de soufre et de la vapeur d'eau, la réaction du bioxyde de soufre ainsi formé avec une seconde partie de sulfure d'hydrogène du courant gazeux d'alimentation et le réglage de la température des gaz en réaction, par introduction dans ces gaz d'un agent liquide, vaporisable, non combustible, de modération de la température et/ou de la réaction, et/ou d'un courant de vapeur d'un agent de modération comprenant au moins 80% en volume de vapeur d'eau.

2. Procédé selon la revendication 1, dans lequel le gaz contenant de l'oxygène contient au moins 90% en volume d'oxygène moléculaire.

3. Procédé selon la revendication 1 ou 2, dans lequel l'agent de modération est introduit directement dans la zone de combustion créée par la combustion de la première partie du courant de gaz d'alimentation.

4. Procédé selon l'une quelconque des revendications précédentes, dans lequel l'agent liquide de modération est introduit sous forme atomisée dans le gaz en réaction.

5. Procédé selon l'une quelconque des revendications précédentes, dans lequel le mélange gazeux d'alimentation comprend au moins 70% en volume de sulfure d'hydrogène.

6. Procédé selon l'une quelconque des revendications précédentes, dans lequel l'agent liquide de modération est de l'eau liquide.

7. Procédé selon l'une quelconque des revendications précédentes, comprenant en outre les étapes consistant à prendre les gaz en réaction, à condenser la vapeur de soufre qui y est contenue, et à séparer le condensat d'avec lesdits gaz.

8. Procédé selon la revendication 7, dans lequel le mélange gazeux d'alimentation contient au moins 85% en volume de sulfure d'hydrogène, et, après la condensation de la vapeur de soufre, le mélange gazeux comprend au moins 70% en volume de vapeur d'eau, et au moins 15% en volume de gas contenant du soufre.

9. Procédé selon la revendication 7 ou la revendication 8, dans lequel lesdits gaz en réaction sont refroidis dans un échangeur de chaleur ou dans un bouilleur de récupération des chaleurs perdues et sont ensuite envoyés dans une condenseur dans lequel est effectuée ladite condensation de la vapeur de soufre.

10. Procédé selon l'une quelconque des revendications 7 à 9, comprenant en outre l'étape consistant à soumettre le mélange gazeux, en aval de la condensation du soufre, à au moins une étape de la réaction catalytique entre le sulfure d'hydrogène résiduel et le bioxyde de soufre résiduel présents dans ledit mélange gazeux, de sorte qu'il se forme un supplément de vapeur de soufre dans cette étape ou dans chacune de ces étapes.

11. Procédé selon la revendication 10, dans lequel, en aval de chacune de ces étapes de réaction catalytique, ladite vapeur de soufre est condensée et est séparée du mélange gazeux, de façon à former un courant de gaz de queue dépourvu de vapeur de soufre.

12. Procédé selon la revendication 11, dans lequel, après réalisation de la condensation en aval du premier étage ou la première étape de réaction catalytique (et en aval de toute étape subséquente éventuelle), le mélange gazeux comprend plus de 80% en volume de vapeur d'eau et plus de 5% en volume de gas contenant du soufre.

13. Procédé selon l'une quelconque des revendications 1 à 5, dans lequel l'agent liquide de modération est du bioxyde de carbone liquide.

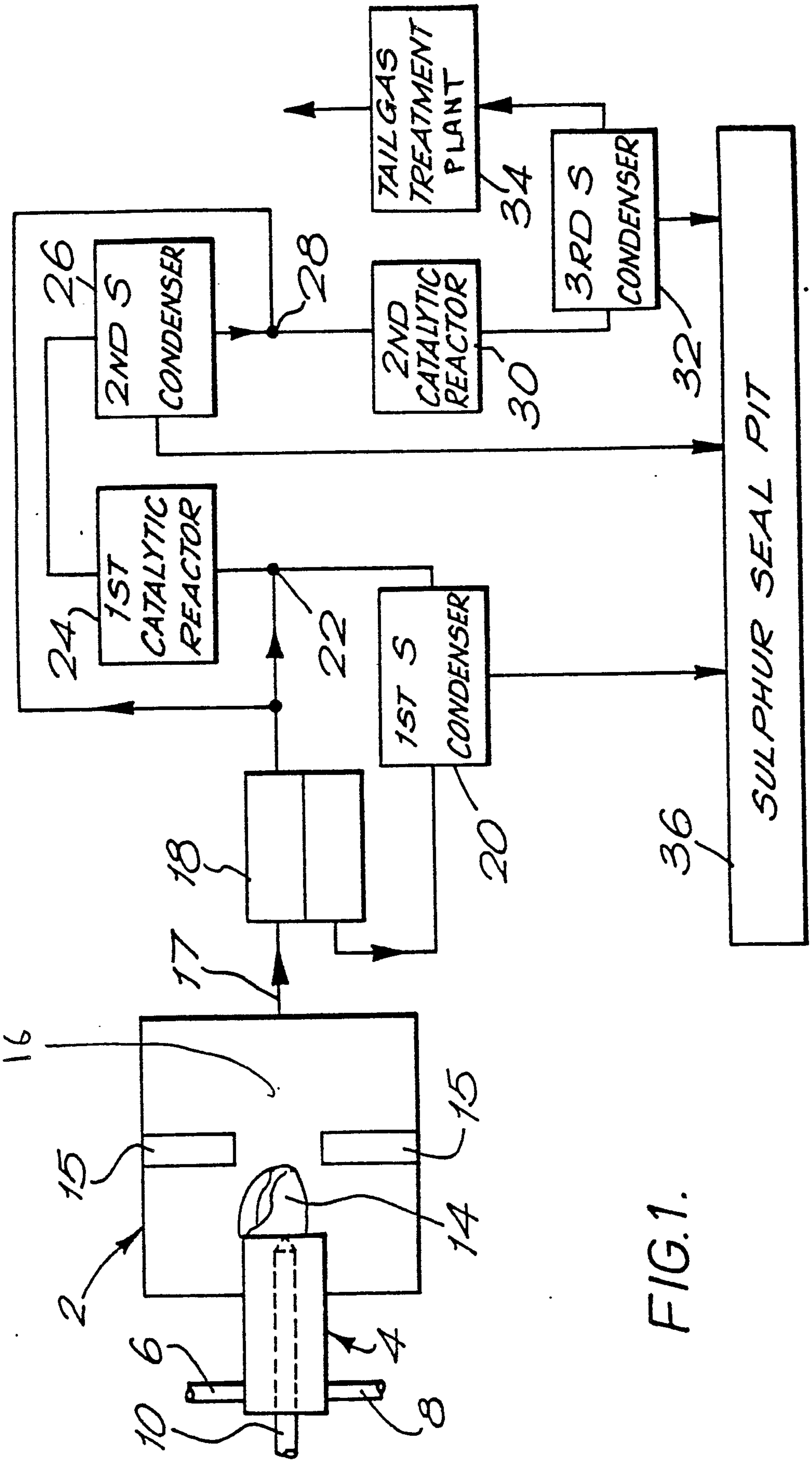
TAIL GAS TREATMENT PLANT
34
3RD S CONDENSER
32
2ND S CONDENSER
26
28
2ND CATALYTIC REACTOR
30
1ST CATALYTIC REACTOR
24
22
1ST S CONDENSER
20
SULPHUR SEAL PIT
36
18
17
16
15
15
14
2
4
6
8
10

FIG.1.

FIG. 2.

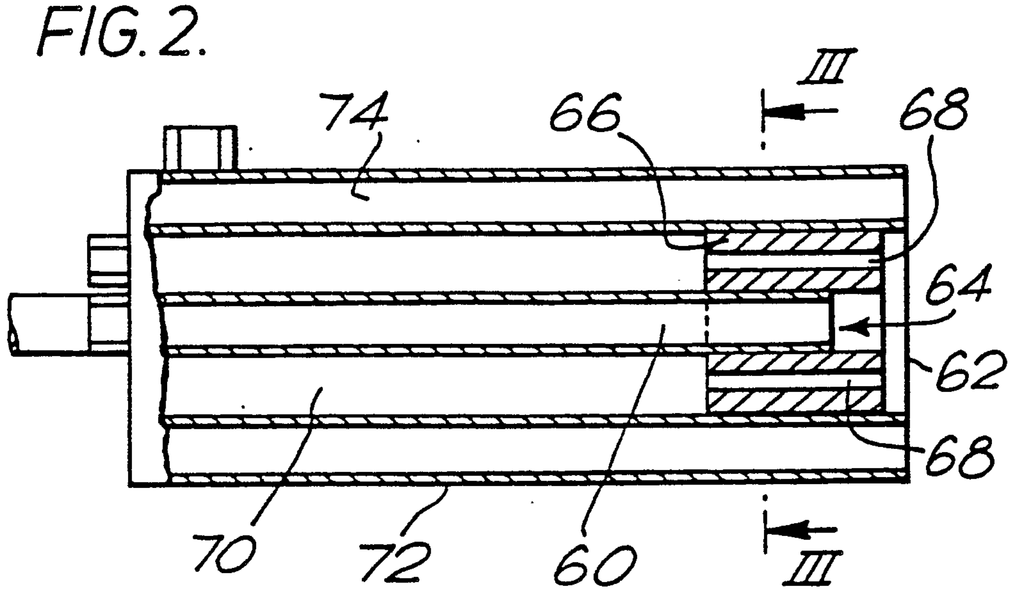


FIG. 3.